**Europäisches Patentamt**

**European Patent Office**

**Office européen des brevets**

(19)

(11) Veröffentlichungsnummer: **0 074 430**

**A1**

(12) # EUROPÄISCHE PATENTANMELDUNG

(21) Anmeldenummer: **81107324.6**

(22) Anmeldetag: **16.09.81**

(51) Int. Cl.³: **H 01 R 13/53**
**B 23 K 9/32, H 02 G 15/24**

(43) Veröffentlichungstag der Anmeldung:
**23.03.83** Patentblatt **83/12**

(84) Benannte Vertragsstaaten:
**AT CH DE FR GB IT LI NL SE**

(71) Anmelder: **Wallner, Manfred J.**
**Nümmener Strasse 53**
**D-5650 Solingen 1(DE)**

(72) Erfinder: **Wallner, Manfred J.**
**Nümmener Strasse 53**
**D-5650 Solingen 1(DE)**

(54) **Schnellkupplung für den Anschluss von elektrischen Schweiss- u. Schneidbrennern an elektrische Schweissgeräte.**

(57) Diese Schnellkupplung besteht aus einem Kupplungs- und einem Steckerkörper aus elektrisch nicht leitendem Werkstoff mit auswechselbaren Einsätzen zur Übergabe von Strom-Wasser-und Gasverbindungen. Die Körper (13, 3, 21, 26) der Steckverbindungen sind mit federbelasteten Ventilen (4, 14, 28) ausgestattet, die im unbetätigtem Zustand dicht schliessen. Die Einsätze für die Stromübergabe (3) sind mit Kontakten ausgestattet, die so befestigt sind, daß beim Einstecken des Steckerstiftes (13) ein sicherer Stromübergang erfolgt. An den Enden der Steckverbinder (13, 21, 3, 26) sind Gewinde angebracht, auf welche die dem jeweiligen Anschluß erforderlichen Adaptoren (17, 23, 9, 31) aufgeschraubt werden können. Die Arretierung der Teile erfolgt durch einen Körper (33) in welchem eine Arretierhülse (35) federbetätigt so eingebaut ist, daß eine Kugel (34) so in die Nut eines Sicherungsstiftes eingreift, daß dieser in seiner Position festgehalten wird. Beim Einstecken des Kupplungssteckers drückt der Haltestift (41) soweit gegen die Arretierhülse (35) bis die Kugel (34) in die Nut des Haltestiftes (41) einrastet und der Sicherungsstift frei wird. Die Arretierung kann jedoch auch durch eine Überwurfmutter erfolgen, durch welche beide Körper zusammengehalten werden.

Um ein Abknicken des Schlauchpaketes an den Anschlüßen zu verhindern, wird der Stecker mit einem elastischen Stab versehen, welcher in das Schlauchpaket eingeführt wird.

Fig. -2-    Fig. -1-

Schnellkupplung für den Anschluß von elektrischen Schweiß- und Schneidbrennern an elektrische Schweißgeräte.

Die Erfindung bezieht sich auf eine Schnellkupplung für den Anschluß
von luft- gas- und wassergekühlten Schweißbrennern an elektrische Schweißgeräte, bei welcher alle für den Betrieb des Brenners notwendigen Verbindungen schnell ohne Verlust von Kühlwasser getrennt und wieder verbunden
werden können und jeder handelsübliche Brenner ohne Änderung des Schlauchpaketes und dessen Anschlüssen an den Kupplungsstecker angeschlossen werden
kann.

Alle Brenner an WIG, MIG/MAG und Plasma-Schweiß- und Schneidanlagen werden
mittels eines flexiblen Schlauchpaketes an die jeweiligen Anlagen vorwiegend
über Gewindeverschraubungen angeschlossen. Seit einiger Zeit gibt es auch
Steckverbinder , bei welchen ein Teil der Verbindungsleitungen zusammengefaßt wurden, wobei die Abdichtung der Steckerstifte in der Regel über O-Ringe erfolgt. Der Stromübergang wird durch Zusammenschrauben von zwei leitenden Metallflächen der Stecker- bzw. Kupplungsgehäuse erreicht.

Bei Brennern mit Gewindeanschluß müßen für einen Brennerwechsel erst die
richtigen Schlüßelgrößen bereitstehen. Außerdem läuft beim Öffnen des Kühlwasserkreislaufes das Schlauchpaket und teilweise auch das Kühlsystem leer.
Sind Anlagen und Brenner bereits mit bekannten Stecksystemen ausgerüstet,
so müßen im Betrieb zwei verschiedene Brenner am Lager gehalten werden, da
die Schlauchpakete für ein Stecksystem andere Anschlüße besitzen als für Gewindeverschraubungen und nicht gegeneinander austauschbar sind. Die bekannten Stecksysteme haben auch keine selbstschließenden Ventile in den Steckverbindungen, so daß auch hierbei ein Kühlmittelverlust auftritt. Da bei
einer Schweißbrennerkupplung eine Vielzahl unterschiedlicher Verbindungen
hergestellt werden müßen wie z.B.

1. hochfreuquenzüberlagerter Schweißstrom
2. Kühlwasservorlauf
3. Kühlwasserrücklauf
4. Schutzgas
5. Steuerkabel

bei MIG/MAG-Anlagen kommt als 6. noch der zu transportierende Draht dazu.
Bei Plasma-Anlagen erweitert sich die Reihe um

7. Plasmagas
8. Pilotstrom

- 2 -

- 2 -

Kupplungen oder Stecksysteme welche alle Verbindungen in einer Einheit zusammengefaßt haben, sind bisher nicht bekannt.

Zweck der Erfindung ist es, hier Abhilfe zu schaffen. Die Erfindung, wie sie in den Ansprüchen gekennzeichnet ist, löst das Problem, eine Kupplung für alle anfallenden Aufgaben einsetzen zu können, wobei alle Verbindungen in einer Steckvorrichtung vereint sind, die Verbindungteile selbst im Gehäuse der Steckvorrichtung auswechselbar sind und alle Schlauchpakete ohne Änderung der Gewindeanschlüße über ein Adaptersystem an dem Kupplungsstecker angeschlossen werden können. Durch die Möglichkeit, einzelne Verbindungsteile im Gehäuse auswechseln zu können, ist die Anpassung an jede gewünschte Verbindungsart gewährleistet.

Die durch die Erfindung erreichten Vorteile, sind im wesentlichen in der Kompaktheit der Steckverbindung, der universellen Einsatzmöglichkeit und der sicheren Verbindung der einzelnen Versorgungsleitungen zu sehen. Die Kupplung kann schnell d.h. ohne Lösen einer Schraubverbindung getrennt und wieder verbunden werden. Die Steckverbindung ist hochfrequenzsicher und durch die Isolation der Steckverbinder untereinander auch für zwei Polaritäten, wie bei Plasma-Brennern erforderlich, verwendbar.

Im folgenden wird die Erfindung anhand von Abbildungen näher erläutert. Die Abbildungen zeigen nur eine begrenzte Möglichkeit der Ausführung. Die Abbildungen stellen im einzelnen dar:

Abb. 1 Schnitt durch das Kupplungsgehäuse
Abb. 2 Schnitt durch das Steckergehäuse
Abb. 3 Detailansicht des Verriegelungsmechanismus
Abb. 4 Einbaulage der Steckverbinderelemente
Abb. 5 Drahtführungsteil bei Verwendung für MIG/MAG
Abb. 6 Knickschutzvorrichtung
Abb. 7 Anschluß luftgekühlter Brenner

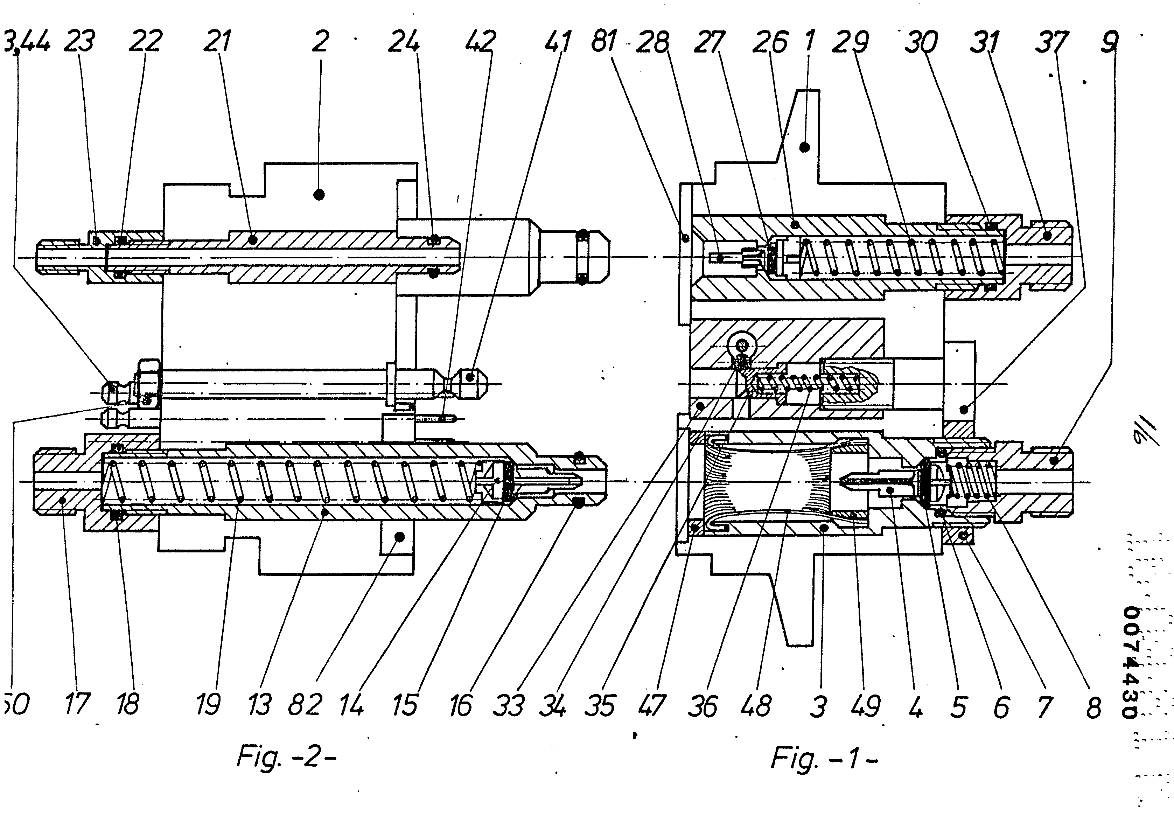

Abb. 1 zeigt einen Querschnitt durch das Kupplungsgehäuse in der Ausführung Geräte- oder Fronttafeleinbau. Das Kupplungsgehäuse besteht in erster Linie aus dem Isolierkörper ( 1 ), in welchen die Steckverbinderelemente entsprechend dem Verwendungszweck eingesteckt und auf der Rückseite mit dem für den Maschinenabschluß oder bei Kupplungsgehäusen in Schlauchpaketen erforderlichen Adaptoren versehen sind. Um die Anzahl der erforderlichen Steckverbinderelemente möglichst gering zu halten, erfolgt die Übergabe von Schweißstrom gleichzeitig mit einer Kühlwasserleitung. Erfindungsgemäß wird für die sichere Stromübergabe eine Buchse ( 3 ) mit einem oder einer Vielzahl von gefederten tonnenförmig gebogenen Einzelkontakten ( 48 ) verwendet, wobei die Einzelkontakte an einem Ende mittels eines Klemmringes ( 49 ) fest und in sicherm Kontakt mit der Buchse ( 3 ) gehalten werden.

Beim Einstecken des Steckerstiftes ( 13 ) dehnen sich dabei die Einzelkontakte ( 48 ) in der Gegenrichtung aus und gewährleisten durch Ihren Anpressdruck eine sichere elektrische Verbindung. Gleichzeitig wird durch die Bohrung der Buchse ( 3 ) ein Kühlwasserkanal geführt.In diesem Kühlwasserkanal sitzt ein flossenförmiger Dichtkegel ( 4 ), welcher durch eine Feder ( 8 ) auf die Dichtfläche ( 5 ) gedrückt wird und so bei nicht eingesetztem Steckerteil den Kühlwasserkreislauf sicher abdichtet. Um eine mögliche Kriechstrecke für die dem Schweißstrom überlagerte Hochfrequenz zwischen Buchse ( 3 ) und Gehäuse ( 1 ) zu unterbrechen, ist die Bohrung für die Buchse ( 3 ) an ihrer Vorderseite mit einer abgestuften Bohrung versehen. In der Mittelbohrung des Gaseinsatzes ( 26 ) befindet sich ein Ventilkegel ( 28 ), welcher durch die Feder ( 29 ) auf die Dichtfläche ( 27 ) gedrückt wird. Bei nicht eingeführtem Steckerteil sind die Gaskanäle absolut dicht verschlossen. Entsprechend der Ausrüstung der Steckerteile wird nur der für den angeschlossenen Brenner erforderliche Gaskanal geöffnet.

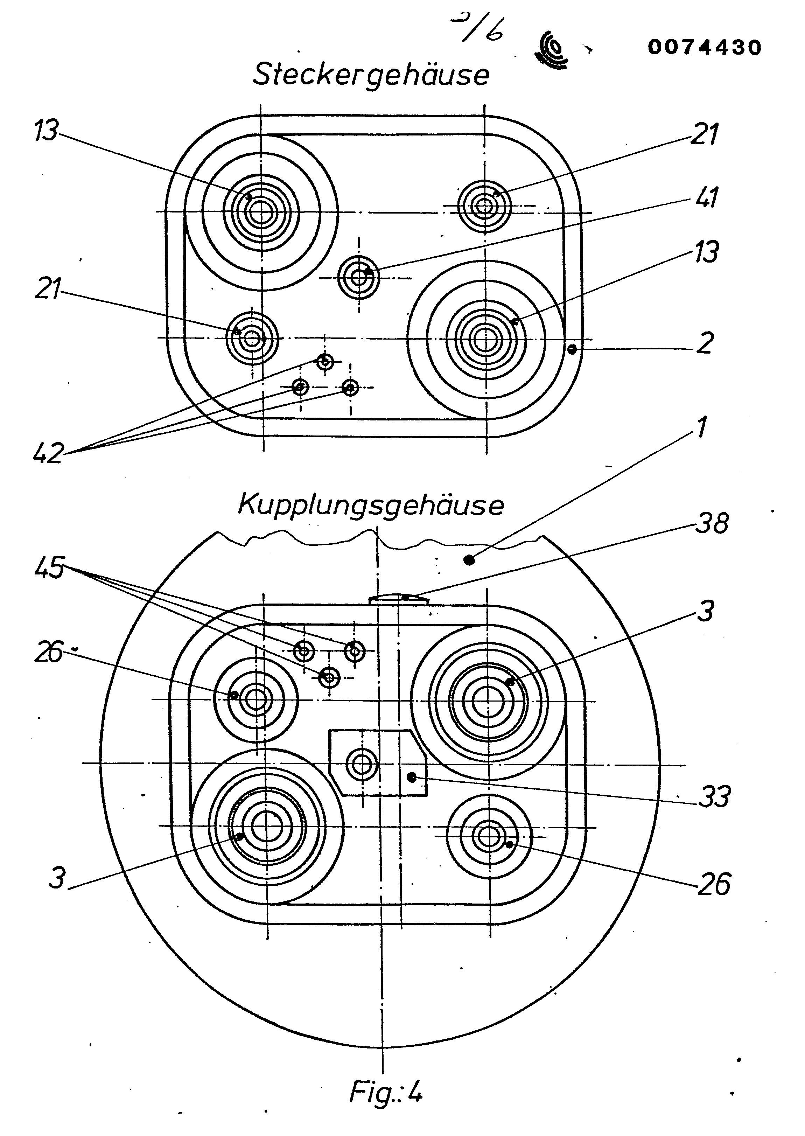

Die Lage der einzelnen Steckverbinder zeigt Abb. 4.

Die vorbeschriebene Ausstattung der Steckverbinderelemente wird bei Verwendung in WIG-Anlagen benutzt, wobei erstmals die Möglichkeit der wahlweisen Verwendung von WIG- und Plasma-Brennern an WIG-Geräten möglich wird sowie die Verwendung einer Schnellkupplung an Plasma-Schweiß- und Schneidgeräten.

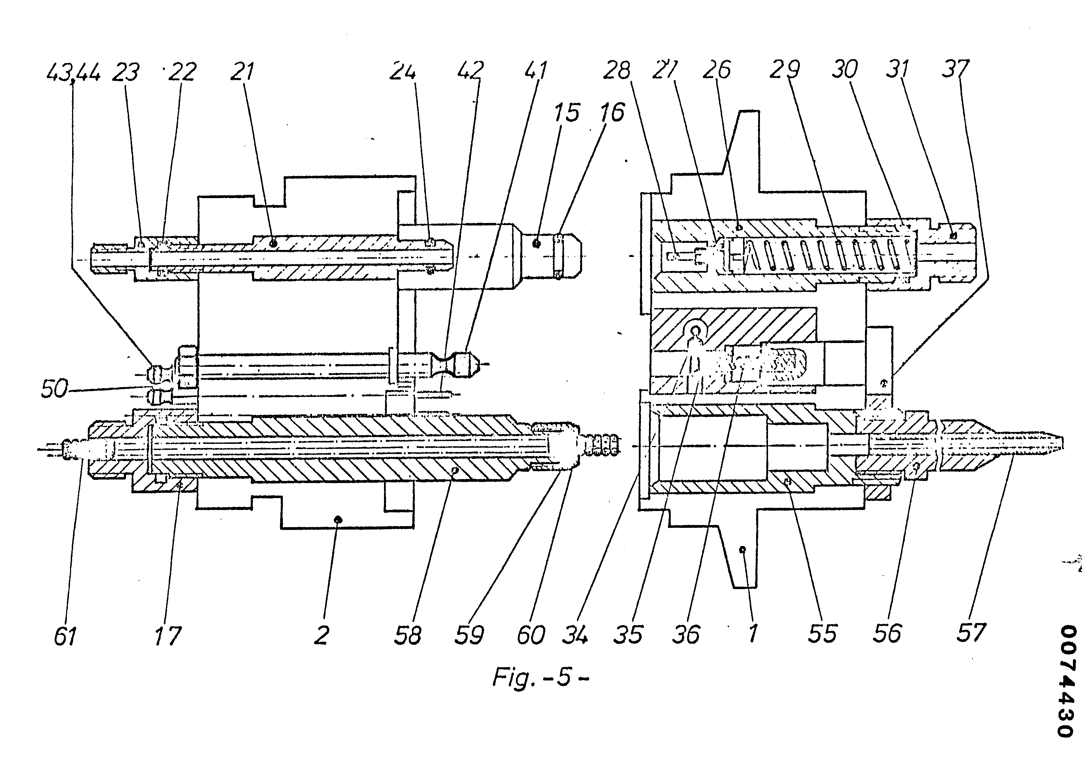

Wird die Schnellkupplung dagegen an MIG/MAG-Geräten eingesetzt, ändert sich die Ausstattung gemäß nachstehender Beschreibung:
In eine der Bohrungen ( 3 ) wird an Stelle eines Strom-Wasser-Steckverbinders der in Abb. 5 gezeigte Drahtführungsteil eingesetzt.
Die Gaszuführung erfolgt über einen der Steckverbinder ( 26 ), wobei der zweite Steckverbinder ( 26 ) den Wasserrücklauf übernimmt.

Im oberen Teil des Gehäuses ( 1 ) sind die Bohrungen ( 45 ) untergebracht, in welche die Buchsen für die Steuerkontakte eingesetzt werden. Diese bestehen ebenso wie die Strom-Wasser-Steckverbinder aus einer Buchse mit eingesetzten tonnenförmig gebogenen Einzelkontakten, welche an einem Ende fest mit der Buchse verbunden sind. Beim Einstecken des Steckerteils längen sich die Einzelkontakte in die freie Richtung und bilden durch die Vielzahl der angepreßten Einzelkontakte einen hervorragenden Stromübergang.

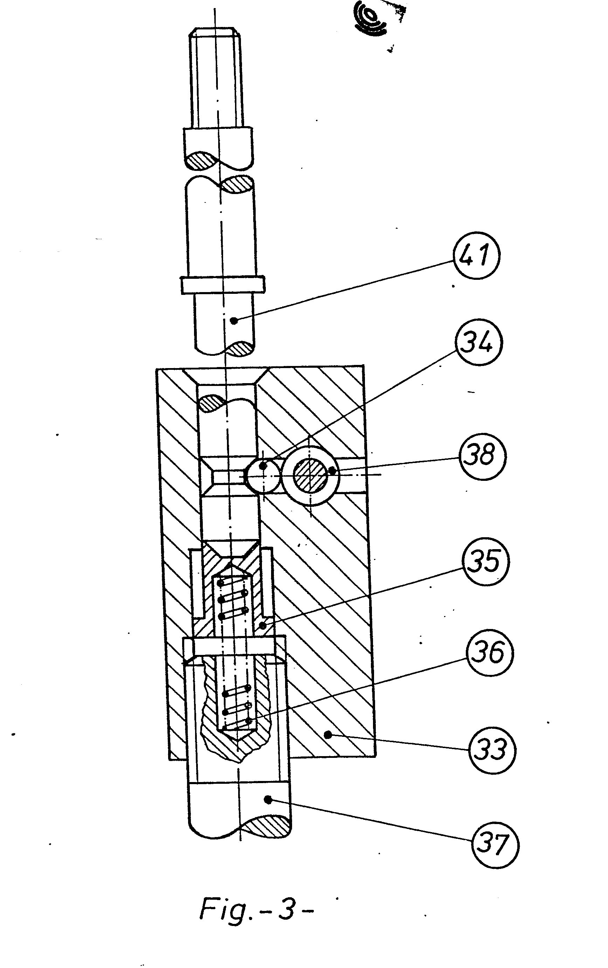

In der mittigen Ausnehmung des Gehäuses befindet sich der automatische Verriegelungsmechanismus ( 33 ). Dieser besteht aus einem Körper mit einer achssial abgestuften Bohrung ( gemäß Abb. 3 ) in welcher ein Arretierkegel ( 35 ) eingesetzt wird, welcher durch die Feder ( 36 ) nach vorne gepreßt wird. Die Gegenführung der Feder ( 36 ) dient gleichzeitig als Befestigungsschraube ( 37 ) für den Körper ( 33 ). Dadurch wird die in der Quer-bohrung liegende Kugel ( 34 ) gehalten, welche durch Ihre Lage den Sicherungsstift ( 38 ) in dessen radialer Ausnehmung festhält. Wird der Kupplungsstecker in die Buchse eingesteckt, so drückt der Haltestift ( 41) gegen den Arretierkegel ( 35 ). Ist der Kupplungsstecker vollkommen eingesteckt, so fällt die Kugel ( 34 ) in die radiale Nut des Haltestiftes ( 41 ). Dadurch wird der Sicherungsstift (38 ) freigegeben und durch die Feder ( 49 ) nach oben gedrückt. Dadurch wird die Kugel ( 34 ) in die Nut des Haltestiftes ( 41 ) gepreßt und dadurch der Kupplungsstecker fest im Kupplungsgehäuse verriegelt. Zum Lösen wird der Sicherungsstift ( 38 ) gedrückt, die Kugel ( 34 ) wird frei und der Kupplungsstecker kann gezogen werden. Dadurch wird der Arretierkegel ( 35 ) durch die Feder ( 36 ) nach vorne gedrückt und die Kugel (34) in die Nut des Sicherungsstiftes ( 38 ) gepreßt, wodurch dieser in seiner Offen-Stellung gehalten wird.

Abb. 2    zeigt einen Schnitt durch das Steckergehäuse der Erfindung, dessen wesentliches Teil das isolierende Gehäuse ( 2 ) bildet. In diesem Gehäuse befinden sich Bohrungen , in welche die Steckerstifte (21/13 ) entsprechend der vorgegebenen Bestückung für den verwendeten Brennertyp eingesetzt werden. Die Befestigung erfolgt durch die aufschraubbaren Anschlußadaptoren ( 17 u. 23 ), welche entsprechend der Originalanschlüße des verwendeten Schlauchpaketes ausgewählt werden. Durch diese Wechseltechnik ist es möglich, im Bedarfsfall den Kupplungsstecker vom Schlauchpaket abzuschrauben und den Brenner ohne Änderung an den Anlagen mit Gewindeverschraubung zu verwenden.

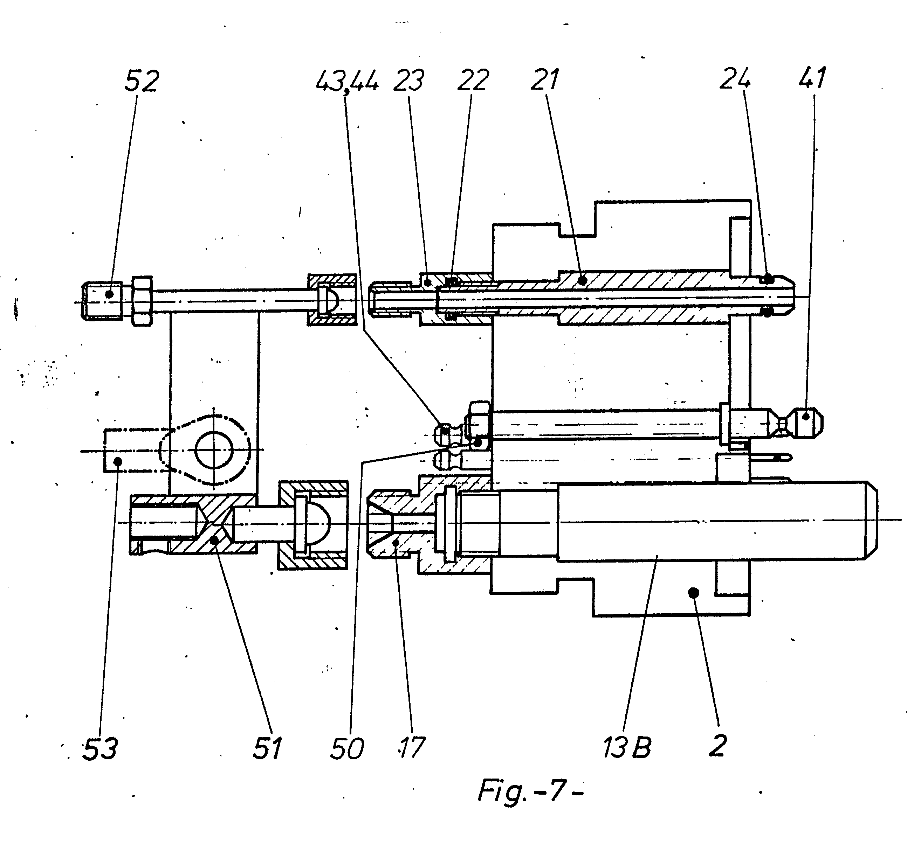

Bei Brennern in luft- oder gasgekühlter Ausführung wird für die
Stromübergabe die gleiche Anschlußbuchse der Kupplung wie für den
kombinierten Strom-Wasseranschluß bei wassergekühlten Brennern benutzt, wobei jedoch das Ventil ( 4 ) für den Wasserkanal nicht geöffnet wird und auch keine Bohrung für das Steckerventil ( 14 ) enthält. Wird ein WIG-Brenner mit separater Gas- und Schweißstromführung angeschlossen, so erfolgt der Schweißkabelanschluß an dem Anschlußadaptor ( 17 ), der Gasanschluß an Adaptor ( 23 ) gemäß Abb.7.
Wird ein Brenner mit kombiniertem Strom-Gaskabel angeschlossen, so
wird der elektrische Übergang auf den Gasanschluß durch einen Adaptor hergestellt, der anstelle der Anschlüße ( 17 und ( 23 ) eingebaut wird.

Entsprechend dem anzuschließenden Brenner sind mit einem Steckerkörper ( 2 ) als Grundelement, durch Einbau der verschiedensten
Steckertypen alle Möglichkeiten zum Anschluß jedes bekannten,
elektrischen Schweiß- oder Schneidbrenners möglich.

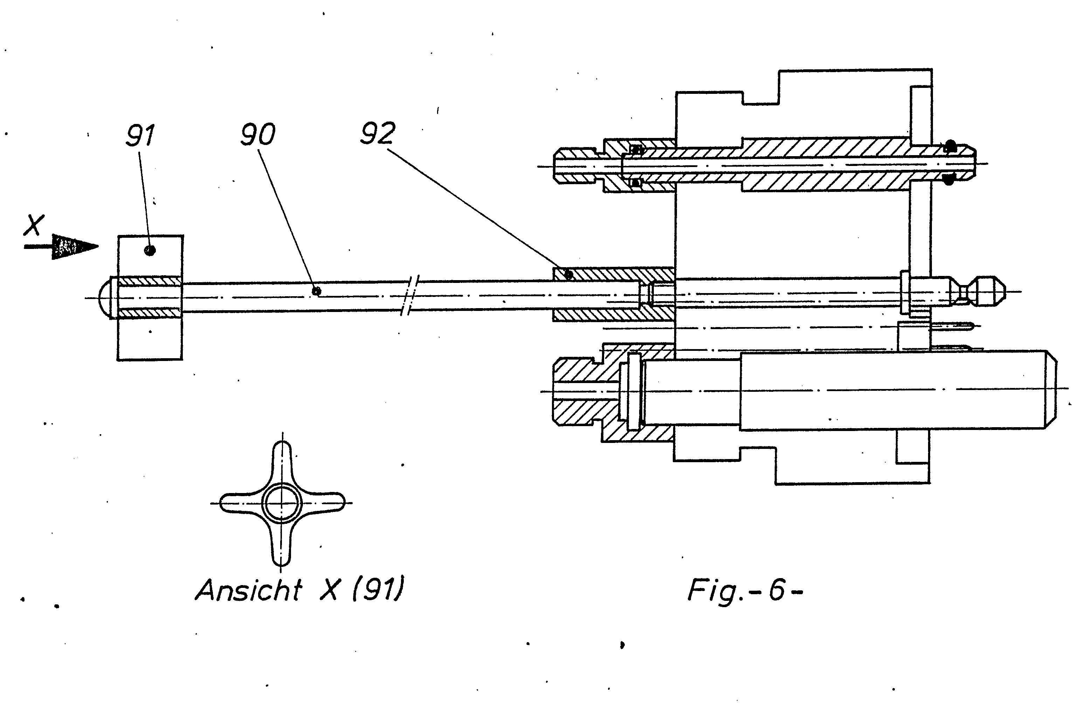

Abb. 6 zeigt eine Möglichkeit das an den Anschlußadaptoren 17 + 23 angeschlossene Schlauchpaket gegen Abknicken zu schützen. Diese Möglichkeit soll einem Kabelbruch der Stromwasseranschlüsse des Schlauchpaketes entgegenwirken, welches bei häufigem Knicken des Schlauchpaketes ein Problem bei allen Schlauchpaketen sowohl mit Gewindeanschlüssen wie auch bei bekannten Steckverbindersystemen darstellt.
Diese Knickschutzvorrichtung besteht im wesentlichen aus einem elastischen stabförmigen Material ( 90 ) vorzugsweise einer Feder oder
Glasfiberstab, welcher in das Schlauchpaket gesteckt wird und mit
dem Steckergehäuse fest verbunden ist. ( 92 ). Dadurch ist ein
scharfes Abknicken des Schlauchpaketes nicht mehr möglich, da der
Knick des Schlauchpaketes nur im Bereich des Biegeradiuses des
elastischen Stabes ( 90 ) möglich ist. Um den Stab ( 90 ) daran
zu hindern, die Hülle des Schlauchpaketes zu beschädigen, kann
das freie Ende des Stabes ( 90 ) mit einem flossenförmigen Körper ) 91 ) versehen werden, in dessen Hohlräume die einzelnen
Schläuche des Schlauchpaketes zu liegen kommen. Damit wird die
Kraft beim Knicken des Schlauchpaketes gleichmäßig auf alle Einzelschläuche und die Hülle des Schlauchpaketes verteilt.

P A T E N T A N S P R Ü C H E

1. Schnellkupplung für elektrische Schweiß- und Schneidbrenner bestehend aus Kupplungs-und Steckerteil deren Hauptelemente ein Gehäuse (1+2) aus einem elektrischen, nicht leitenden Werkstoff, vorzugsweise Kunststoff ist, in welchem Aufnahmebohrungen vorgesehen sind, in die entsprechend dem Verwendungszweck, Stecker- und Buchsenteile eingesetzt werden können, die zur Übergabe der am Brenner benötigten Medien und des Schweiß- und Steuerstroms dienen.

2. Schnellkupplung nach Patentanspruch 1, dadurch gekennzeichnet, daß zwischen der Wand der Bohrungen im Gehäuse (1+2) und dem Außendurchmesser des eingesetzten Stecker ( 13 )- bzw. Buchsenteiles (3) ein Luftspalt von mindestens 0,1 mm verbleibt, der ein Überspringen der dem Schweißstrom überlagerten Hochfrequenz über die glatte Fläche der Gehäusevorderseite auf ein anderes stromführendes Stecker- oder Buchsenteil verhindert.

3. Schnellkupplung nach den Patentansprüchen 1+2, dadurch gekennzeichnet, daß am Gehäuse (1,2) um die stromführenden Teile jeweils ein ringförmige Erhöhung ( 8 ) besteht, welche in eine ringförmige Vertiefung im Gehäuse ( 82 ) um die stromführenden Teile des anderen Gehäuses eingreift und damit Abrisskanten bildet, die ein Überspringen von Hochfrequenz verhindert.

4. Schnellkupplung nach den Patentansprüchen 1-3, dadurch gekennzeichnet, daß mindestens eine der Buchsen (3) mit gefederten Kontakten ausgerüstet ist, dessen eines Ende in festen Kontakt mit der Buchse (3) steht und zur Stromübergabe gegen den zylinderförmigen Schaft des Steckerkörpers ( 13 ) gedrückt wird.

5. Schnellkupplung nach den Patentansprüchen 1-3, dadurch gekennzeichnet, daß mindestens einer der Stecker ( 13 ) mit gefederten Kontakten ausgerüstet ist., dessen eines Ende in festem Kontakt mit dem Köroer(13) steht und die zur Stromübergabe gegen die zylinderförmige Innenwand der Buchse (3) gedrückt werden.

6. Schnellkupplung nach den Patentansprüchen 1-3, dadurch gekennzeichnet, daß mindestens eine der Buchsen mit einem eingelegten Kontaktstreifen versehen ist, dessen wechselseitig nach innen und außen gedrückte Kontaktflächen zur Stromübergabe einmal gegen die zylinderförmige Wand der Buchse (3) zum anderen gegen den zylinderförmigen Schaft des Steckers (13) gedrückt werden.

7. Schnellkupplung nach den Patentansprüchen 1-6, dadurch gekennzeichnet, daß in den Buchsen und Steckerteilen für die Stromübergabe gleichzeitig die Kanäle für den Kühlwasserkreislauf eingearbeitet sind.

8. Schnellkupplung nach den Patentansprüchen 1-7, dadurch gekennzeichnet, daß in den Kanälen für den Kühlwasserkreislauf federbetätigte Dichtkegel (4+14) eingesetzt sind, welche im unbetätigten Zustand den Wasserkanal dicht schließen, beim Zusammenstecken jedoch gegenseitig so aufeinanderstoßen, daß beide Ventilkegel soweit von der Dichtfläche (15+5) abgehoben werden, daß der volle Leitungsquerschnitt freigegeben wird.

9. Schnellkupplung nach den Patentansprüchen 1-8, dadurch gekennzeichnet, daß in dem , dem Mediumeingang zuzuordnenden Steckerteil für die Obergabe von Gas ein federbelasteter Ventilkegel eingesetzt ist, welcher im unbetätigten Zustand den Gaskanal dicht schließt, beim Zusammenstecken jedoch von gegengesetzten Steckerteil soweit von seiner Dichtfläche (27) abgehoben wird, daß der Leitungsquerschnitt soweit freigegeben ist, daß die zur Brennerversorgung benötigte Gasmenge ungehindert durchströmen kann.

10. Schnellkupplung nach den Patentansprüchen 1-9, dadurch gekennzeichnet, daß in einem der Körper (1+2) ein Verriegelungsmechanismus eingebaut ist, bei welchem ein federbelasteter Arretierkegel (35) in unbetätigtem Zustand eine Kugel (34) so in die radiale Nut eines Sicherungsstiftes (38) drückt, daß dieser in dieser Stellung festgehalten wird, bis durch Einstecken des Haltestiftes (41) die Kugel (34) in die radiale Nut des Haltestiftes durch die Kraft der Feder (49), welche den Sicherungsstift (38) nach oben drückt, einrastet und den Haltestift (41) in dieser Position festhält, wobei durch Drücken des Sicherungsstiftes (38) die Kugel (34) soweit in die radiale Nut des Sicherungsstiftes zurückgedrückt werden kann, daß der Haltestift(41) ausgezogen werden kann.

11.Schnellkupplung nach den Patentansprüchen 1-10, dadurch gekennzeichnet, daß die Steckerkörper an der dem Steckermund gegenüberliegenden Seite ein Anschlußgewinde besitzen, auf oder in welches austauschbare Anschlußadaptoren (17+23) geschraubt werden können, die dem Originalgewinde des anzuschließenden Brenners entsprechen.

12.Schnellkupplung nach den Patentansprüchen 1-11, dadurch gekennzeichnet, daß die Buchsenkörper (3+26) an der dem Buchsenhals gegenüberliegenden Seite ein Anschlußgewinde besitzen, auf oder in welches austauschbare Anschlußadaptoren (9+31) geschraubt werden könne, die dem jeweiligen Versorgungsanschluß entsprechen.

13. Schnellkupplung nach den Patentansprüchen 1-12,dadurch gekennzeichnet, daß sich an einem der Gehäuse (1+2) ein umlaufender Halsring (81) befindet, welcher so über einen umlaufenden Absatz (82) des anderen Gehäuses (1+2) in zusammengestecktem Zustand greift, daß durch diese Überlappung eine Abrisstrecke gebildet wird, durch welche auch bei Feuchtigkeit keine Hochfrequenz auf den Außenmantel überspringen kann und eine auch beabsichtigte Berührung stromführender Teile der Schnellkupplung in zusammensteckem Zustand vermieden wird.

14.Schnellkupplung nach den Patentansprüchen 1-9,dadurch gekennzeichnet, daß die Steckverbindung zwischen Gehäuse (1+2) durch eine Überwurfmutter mit Gewinde oder Bayonettverriegelung gesichert wird.

15.Schnellkupplung nach den Patentansprüchen 1-14, dadurch gekennzeichnet, daß an der, dem Schlauchpaket zugewandten Seite des Steckers (2) ein elastischer Stab befestigt ist, der in das Schlauchpaket gesteckt wird, um ein scharfes Knicken des Schlauchpaketes an den Anschlüßen insbesondere an den Quetschverbindungen der Stromwasserkabel zu verhindern.

16.Schnellkupplung nach den Patentansprüchen 1-15, dadurch gekennzeichnet, daß das freie Ende des elastischen Stabes gemäß Patentanspruch 15 mit einem flossenförmigen Körper (91) versehen ist, in dessen Ausnehmungen die einzelnen Schläuche des Schlauchpaketes zu liegen kommen.

17. Schnellkupplung nach den Patentansprüchen 3-16, dadurch gekennzeichnet, daß die Verbindungselemente fest in die Körper eingegossen sind.

18. Schnellkupplung nach den Patentansprüchen 3-16, dadurch gekennzeichnet, daß die Verbindungselemente teilweise fest eingegossen und teilweise auswechselbar montiert sind.

3,44 23 22 21 2 24 42 41 81 28 27 26 1 29 30 31 37 9

50 17 18 19 13 82 14 15 16 33 34 35 47 36 48 3 49 4 5 6 7 8

Fig. -2-

Fig. -1-

9/6

0074430

Fig.-3-

0074430

Steckergehäuse

13     21

41

13

21

2

42

Kupplungsgehäuse

1

45

38

26

3

33

3

26

Fig.:4

Fig. -5-

43,44 23 22 21 24 42 41 15 16 28 27 26 29 30 31 37

50

61 17 2 58 59 60 34 35 36 1 55 56 57

0074430

**91** **90** **92**

X

Ansicht X (91)

Fig. - 6 -

Fig. -7-

**0074430**

Nummer der Anmeldung

**EP 81 10 7324.6**

Europäisches
Patentamt

**EUROPÄISCHER RECHERCHENBERICHT**

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| A | US - A - 4 210 796 (MOERKE)<br>* Spalte 2, Zeilen 19 bis 23; Spalte 4, Zeilen 32 bis 65; Fig. 1, 6 * | 1,7,8, 9 | H 01 R 13/53<br><br>B 23 K 9/32<br><br>H 02 G 15/24 |
| A | US - A - 3 125 649 (CYR)<br>* Spalte 1, Zeile 51 bis Spalte 2, Zeile 29; Spalte 3, Zeilen 14 bis 32; Fig. 1 bis 4 * | | |

**RECHERCHIERTE SACHGEBIETE (Int. Cl.³)**

B 23 K   9/32

H 01 R   4/56

H 01 R   4/60

H 01 R 13/53

H 02 G 15/20

H 02 G 15/24

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Berlin | Abschlußdatum der Recherche | 30-04-1982 | Prüfer | HAHN |
|---|---|---|---|---|---|

EPA form 1503.1   06.78